# EUROPEAN PATENT SPECIFICATION

(11) **EP 1 704 729 B1**
(45) Date of publication and mention of the grant of the patent: **31.05.2017**
(21) Application number: 05702591.8
(22) Date of filing: 05.01.2005
(51) Int. Cl.: H04N 9/73, H05B 37/02

(54) **AMBIENT LIGHT SCRIPT COMMAND ENCODING**
UMGEBUNGSLICHT-SKRIPT-BEFEHLSCODIERUNG
CODAGE DE COMMANDE DE SCENARIO DE LUMIERE AMBIANTE

(30) Priority: 06.01.2004 US 534565 P
(43) Date of publication of application: 27.09.2006
(73) Proprietor: TP Vision Holding B.V., 1097 JB Amsterdam (NL)
(72) Inventor: DIEDERIKS, Elmo, NL-5621 BA Eindhoven (NL); GELDER, Kerno, Van, NL-5621 BA Eindhoven (NL); EGNER, Sebastian, NL-5621 BA Eindhoven (NL)
(74) Representative: DREISS Patentanwälte PartG mbB
(86) International application number: PCT/IB2005/050061
(87) International publication number: WO 2005/069640

(56) References cited:
- US-A1- 2002 047 628
- US-A1- 2003 100 837
- PATENT ABSTRACTS OF JAPAN vol. 018, no. 672 (E-1646), 19 December 1994 (1994-12-19) & JP 06 267664 A (TOSHIBA LIGHTING & TECHNOL CORP), 22 September 1994 (1994-09-22)
- PATENT ABSTRACTS OF JAPAN vol. 014, no. 413 (E-0974), 6 September 1990 (1990-09-06) & JP 02 158094 A (MATSUSHITA ELECTRIC IND CO LTD), 18 June 1990 (1990-06-18)

## Description

This invention relates to production and setting of ambient lighting effects using multiple light sources, and typically based on, or associated with, video content, such as from a video display. More particularly, it relates to a method using light script command encoding to provide a signal stream that allows executing dynamic control over multiple ambient light sources, where desired ambient lighting effects - and desired changes thereto over time - are specified or prescripted, transferred, and played back.

Engineers have long sought to broaden the sensory experience obtained consuming video content, such as by enlarging viewing screens and projection areas, modulating sound for realistic 3-dimensional effects, and enhancing video images, including broader video color gamuts, resolution, and picture aspect ratios, such as with high definition (HD) digital TV television and video systems. Moreover, film, TV, and video producers also try to influence the experience of the viewer using visual and auditory means, such as by clever use of color, scene cuts, viewing angles, peripheral scenery, and computer-assisted graphical representations. This would include theatrical stage lighting as well. Lighting effects, for example, are usually scripted - synchronized with video or play scenes - and reproduced with the aid of a machine or computer programmed with the appropriate scene scripts encoded with the desired schemes.

In the prior art digital domain, automatic adaptation of lighting to fast changes in a scene, including unplanned or unscripted scenes, has not been easy to orchestrate in large part because of the overhead of large high bandwidth bit streams required using present systems.

Philips (Netherlands) and other companies have disclosed means for changing ambient or peripheral lighting to enhance video content for typical home or business applications, using separate light sources far from the video display, and for many applications, some sort of advance scripting or encoding of the desired lighting effects. Ambient lighting added to a video display or television has been shown to reduce viewer fatigue and improve realism and depth of experience.

Sensory experiences are naturally a function of aspects of human vision, which uses an enormously complex sensory and neural apparatus to produce sensations of color and light effects. Humans can distinguish perhaps 10 million distinct colors. In the human eye, for color-receiving or photopic vision, there are three sets of approximately 2 million sensory bodies called cones which have absorption distributions which peak at 445, 535, and 565 nm light wavelengths, with a great deal of overlap. These three cone types form what is called a tristimulus system and are called B (blue), G (green), and R (red) for historical reasons; the peaks do not necessarily correspond with those of any primary colors used in a display, e.g., commonly used RGB phosphors. There is also interaction for scotopic, or so-called night vision bodies called rods. The human eye typically has 120 million rods, which influence video experiences, especially for low light conditions such as found in a home theatre.

Color video is founded upon the principles of human vision, and well known trichromatic and opponent channel theories of human vision have been incorporated into our understanding of how to influence the eye to see desired colors and effects which have high fidelity to an original or intended image. In most color models and spaces, three dimensions or coordinates are used to describe human visual experience.

Color video relies absolutely on metamerism, which allows production of color perception using a small number of reference stimuli, rather than actual light of the desired color and character. In this way, a whole gamut of colors is reproduced in the human mind using a limited number of reference stimuli, such as well known RGB (red, green, blue) tristimulus systems used in video reproduction worldwide. It is well known, for example, that nearly all video displays show yellow scene light by producing approximately equal amounts of red and green light in each pixel or picture element. The pixels are small in relation to the solid angle they subtend, and the eye is fooled into perceiving yellow; it does not perceive the green or red that is actually being broadcast.

There exist many color models and ways of specifying colors, including well known CIE (Commission Internationale de l'Eclairage) color coordinate systems in use to describe and specify color for video reproduction. Any number of color models can be employed using the instant invention, including application to opponent color spaces, such as the CIE L*U*V* (CIELUV) or CIE L*a*b* (CIELAB) systems. The CIE established in 1931 a foundation for all color management and reproduction, and the result is a chromaticity diagram which uses three coordinates, x, y, and z. A plot of this three dimensional system at maximum luminosity is universally used to describe color in terms of x and y, and this plot, called the 1931 x,y chromaticity diagram, is believed to be able to describe all perceived color in humans. This is in contrast to color reproduction, where metamerism is used to fool the eye and brain. Many color models or spaces are in use today for reproducing color by using three primary colors or phosphors, among them ISO RGB, Adobe RGB, NTSC RGB, etc.

It is important to note, however, that the range of all possible colors exhibited by video systems using these tristimulus systems is limited. The NTSC (National Television Standards Committee) RGB system has a relatively wide range of colors available, but this system can only reproduce half of all colors perceivable by humans. Many blues and violets, blue-greens, and oranges/reds are not rendered adequately using the available scope of traditional video systems.

Furthermore, the human visual system is endowed with qualities of compensation and discernment whose understanding is necessary to design any video system. Color in humans can occur in several modes of appearance, among them, object mode and illuminant mode.

In object mode, the light stimulus is perceived as light reflected from an object illuminated by a light source. In illuminant mode, the light stimulus is seen as a source of light. Illuminant mode includes stimuli in a complex field that are much brighter than other stimuli. It does not include stimuli known to be light sources, such as video displays, whose brightness or luminance is at or below the overall brightness of the scene or field of view so that the stimuli appear to be in object mode.

Remarkably, there are many colors which appear only in object mode, among them, brown, olive, maroon, grey, and beige flesh tone. There is no such thing, for example, as a brown illuminant source of light, such as a brown-colored traffic light.

For this reason, ambient lighting supplements to video systems which attempt to add object colors cannot do so using direct sources of bright light. No combination of bright red and green sources of light at close range can reproduce brown or maroon, and this limits choices considerably. Only spectral colors of the rainbow, in varying intensities and saturation, can be reproduced by direct observation of bright sources of light. This underscores the need for fine control over ambient lighting systems, such as to provide low intensity luminance output from light sources. This fine control is not presently addressed in a way that permits fast-changing and subtle ambient lighting under present data architectures.

One problem in the prior art is a lack of a system where descriptions of light settings and effects are generated and stored, and played back.

A more serious problem in the prior art is the large amount of transmitted information that is needed to drive ambient light sources as a function of video content, and to suit a desired fast-changing ambient light environment where color matching and light character modulation are desired.

For example, US Patent 6,166,496 to Lys et al. uses the well known asynchronous DMX-512 data protocol to deliver illumination control signals to ambient light sources. The DMX-512 protocol is the most common communications standard used by the lighting and related stage industries, and it uses multiplexed digital signals, providing up to 512 control data channels per data link. Each of these data channels was originally intended to control lamp dimmer levels, like sliders on a light control console. For each lamp, the desired luminance is sent over the data link as an 8-bit number having a value between 0 and 255. The value 0 corresponds to the light bulb being completely off while 255 corresponds to the light bulb being fully on.

The DMX-512 standard and other standards offer little breadth of specificity, allowing only control of one or a few parameters, and it is a refresh type of system which rebroadcasts desired settings to every lamp device driver all the time, regardless of lamp status, and typically requires a data bitstream of 250,000 bits per second using the IEEE RS-485 transmission standard. If 24 channels are used (one for each controlled ambient light source), the refresh rate is about 1000 times per second; if all 512 channels are used, the refresh rate is 44 times per second. Furthermore, the DMX-512 standard requires 5-pin XLR connectors, and only allows 8-bit resolution. Even if this resolution were hypothetically used in some new architecture to encode 255 different lighting effects, the capability is orders of magnitude too low for modulating luminance, chrominance and light character for ambient lighting as is desired.

Historically, the lighting industry has not considered ambient lighting as a sophisticated partner in producing effects with video, and the DMX512 standard was simply created in 1986 by the United States Institute for Theatre Technology (USITT) as a standardized method for connecting lighting consoles to lighting dimmer modules. Some years later it was revised in 1990 to allow more flexibility, but is essentially still a single parameter refresh system that requires huge amounts of data transfer for operation. In the context of trying to use ancillary data subspaces (e.g., blanking intervals for broadcast video, or subcode spaces on compact discs and DVDs), the data it transmits is insufficient by orders of magnitude. The bit stream or bandwidth overhead for data transmission using systems like DMX-512 protocol present unacceptable challenges for data encoding, storage and retrieval in the context of playable media like DVDs, CDs, and internet transmission.

Because no architecture exists for handling sophisticated ambient lighting effects using an economical data protocol, prior art systems that attempt to introduce sophisticated ambient lighting effects into an ambient space often require a separate information channel for system operation, such as the separate entertainment control signal needed in the lighting entertainment system disclosed in US Patent 6,166,496 to Lys et al., or the computer code or computer application content needed to operate ambient lighting as disclosed by Dowling et al. in US Publication No. US 2003/0057884. Virtually no existing video broadcast systems place ambient lighting code or instructions in any analog waveform spaces, such as the vertical blanking interval in the NTSC broadcast system, and virtually no digital image systems (e.g., DVD formats, MPEG4, etc.) place ambient lighting code in any in any subcode, such as DVD subcode or composite digital video ancillary spaces - largely because the required data overhead (e.g., a bitstream in bits/sec) is too high.

It is therefore advantageous to expand the possible gamut of colors produced by ambient lighting in conjunction with a typical tristimulus video display system. It is also desired to exploit characteristics of the human eye, such as changes in relative luminosity of different colors as a function of light levels, by modulating or changing color and light character delivered to the video user using an ambient lighting system that uses to good advantage compensating effects, sensitivities, and other peculiarities of human vision. It is also advantageous to have a system for encoding and decoding light script commands which reduces the bitstream required down to levels low enough to exploit known methods for compressing and shortening needed data bits to encode complex phenomena so that a light command script can be stored and transmitted inside ancillary data spaces such as subcode spaces or in available spaces on modulated data carriers, such a RF (radio frequency) or digital bitstreams.

It is further desired to be able to split the data required to drive a sophisticated ambient lighting system into two parts that can be generated, stored, retrieved and used independently, and to make such a system backwardly compatible with existing broadcast and productions standards like NTSC, SECAM, PAL, and MPEG4.

Information about video and television engineering, compression technologies, data transfer and encoding, human vision, color science and perception, color spaces, colorimetry and image rendering, including video reproduction, can be found in the following references which are hereby incorporated into this disclosure in their entirety: ref[1] Color Perception, Alan R. Robertson, Physics Today, December 1992, Vol 45, No 12, pp. 24-29; ref[2] The Physics and Chemistry of Color, 2ed, Kurt Nassau, John Wiley & Sons, Inc., New York © 2001; ref[3] Principles of Color Technology, 3ed, Roy S. Berns, John Wiley & Sons, Inc., New York, © 2000; ref[4] Standard Handbook of Video and Television Engineering, 4ed, Jerry Whitaker and K. Blair Benson, McGraw-Hill, New York © 2003.

US 2003/100837 relates to a method for controlling light operation of multicolored LED light by a computer. A lighting control signal for a microprocessor may be embedded into a television signal, so that when the television signal is processed by the receiver, a microprocessor processes certain portions of the bandwidth of the television signal for signals relating to the room lights. The color and intensity of room lights may be directly controlled through a television signal. Thus, a television signal may instruct the room lights to dim at certain points during the presentation, to strobe to different colors at other points, and to flash at other points.

US 2002/047628 relates to a method for controlling devices in a networked lighting system. By combining and independently controlling light sources, a variety of enhanced computer controlled programmable lighting effects are realized.

The invention relates to encoding light script commands that allow many controlled operating parameters to be specified simultaneously for a plurality of ambient light units, and where changes in the controlled operating parameters can occur automatically for a particular light source even though the light script command code is silent regarding that light source. Rather than a bandwidth-intensive, refresh-as-you-go system as is given by USITT / ESTA Standard DMX-512, the light script command encoding taught herein provides an economical, elegant method where no light script information need be specified or transmitted at regular intervals and where initial settings and/or changes can be encoded in files stored or transmitted separately from disparate data sources.

The invention includes a method for light script command encoding for dynamically controlling an ambient light source, whose steps include [1] encoding a setting code usable by the ambient light source to specify at least one controlled operating parameter that comprises at least one of a luminance, a chrominance, and a light character; [2] encoding a change code usable by the ambient light source to specify at least one change in the controlled operating parameter, the change code comprising at least one of a change type and a rate parameter; and the setting code and the change code each so formulated that the ambient light source using same and so dynamically controlled can fully execute the change through a range of values of the controlled operating parameter without further command encoding.

The ambient light source can comprise a plurality of individual light sources and the setting code and/or the change code, can be further encoded to specify the controlled operating parameter for any of a plurality of light IDs.

A third possible step includes encoding another change code that follows a first change code, with the setting code and the second change code each so formulated that the ambient light source can fully execute the second change without further command encoding; optionally, another possible step includes [4] encoding a repeat of the setting code formulated to be usable by the ambient light source after the second change code, such as to allow refreshing of the light script in the event of a change of program channel or a similar user requested change.

The change code can include a start time and a stop time for the change, and the change code itself can comprise a change type that specifies the change in the controlled operating parameter, wherein the change type comprises at least one of: a fade in; a fade out; a sinusoidal output; a trigonometric output; a spike; a waveform; a specified mathematical function of the operating parameter; a logical or mathematical operator; and an envelope.

The change code can comprise a rate parameter that specifies or informs the change in the controlled operating parameter, for example, where the rate parameter comprises at least one of: an argument of a function, such as, theta; a fade in time period over which a fade in occurs; a fade out time period over which a fade out occurs; a magnitude of a function; a phase of a function; an off time period; an on time period; and a step frequency.

Entropy encoding of at least part of at least one of the setting code and the change code can be used to reduce the data stream, and the data encoded can be packetized. The light script encoded using the invention can be transmitted a content carrier, a synchronous data carrier or an asynchronous data carrier, and/or the light script code can be recorded onto a computer-readable medium, which can be read during a display of video content.

The setting codes and change codes can be packetized and so formulated so as to allow separate communication of the setting code and the change code.

The invention also includes a method for dynamically controlling an ambient light source using light script command encoding, where possible steps include:
[1] decoding a setting code that specifies settings usable by the ambient light source; [2] using the decoding of the setting code to specify at least one controlled operating parameter that comprises at least one of a luminance, a chrominance, and a light character; [3] driving the ambient light source using the controlled operating parameter;
[4] decoding a change code that specifies at least one change in the controlled operating parameter, the change code comprising at least one of a change type and a rate parameter; [5] driving the ambient light source using the change through a range of values of the controlled operating parameter without further light script command decoding.

In this way, a range of values results without further light script command encoding. The method can additionally comprise another step, namely, prior to step [1], deriving the setting code from a first signal source, and the change code from a second signal source; or alternatively, prior to step [1], reading at least one of the setting code and the change code from a computer-readable medium. Another possible step is, after step [4], further changing the controlled operating parameter based on decoding one of a user preference and an input from a user interface.

The light script command encoding can be recorded onto a computer-readable medium that includes [1] a computer-readable a setting code usable by the ambient light source to specify at least one controlled operating parameter that comprises at least one of a luminance, a chrominance, and a light character; and [2] a computer-readable change code usable by the ambient light source to specify at least one change in the controlled operating parameter, the change code comprising at least one of a change type and a fate parameter; and with the setting code and the change code each so formulated that the ambient light source can fully execute the change through a range of values of the controlled operating parameter without requiring further reading of the light script command encoding. A second change code can be similarly encoded, allowing the ambient light source to fully execute a second change without requiring further reading of the light script command encoding.
**FIG. 1** shows a schematic diagram of a two-element light script code according to the invention;
**FIG. 2** shows a schematic diagram of a light script code comprising a setting code followed by additional change codes;
**FIG. 3** shows a schematic diagram of a light script code comprising periodically generated setting codes separated by sequences of change codes;
**FIG. 4** shows a schematic representation of possible elements of a setting code according to the invention;
**FIG. 5** shows a schematic representation of possible elements of a change code according to the invention;
**FIG. 6** shows a schematic diagram of a possible system utilizing the light script code of the invention to control multiple ambient light sources;
**FIG. 7** shows a downward view - part schematic and part cross-sectional - of a room in which ambient light from multiple ambient light sources is produced using a light script according to the invention;
**FIG. 8** shows a schematic surface view of a video display with six ambient light sources (center lights) to be controlled using a light script according to the invention;
**FIGS. 9 -11** show cartesian plots of execution of controlled light character parameters as a function of time, for an ambient light source under control of a light script code where a change code has been specified;
**FIG. 12** shows a schematic diagram of a possible system utilizing a two-part light script code from two distinct signal sources to control multiple ambient light sources;
**FIG. 13** shows a schematic diagram of a possible system utilizing a two-part light script code from multiple signal sources to control multiple ambient light sources.

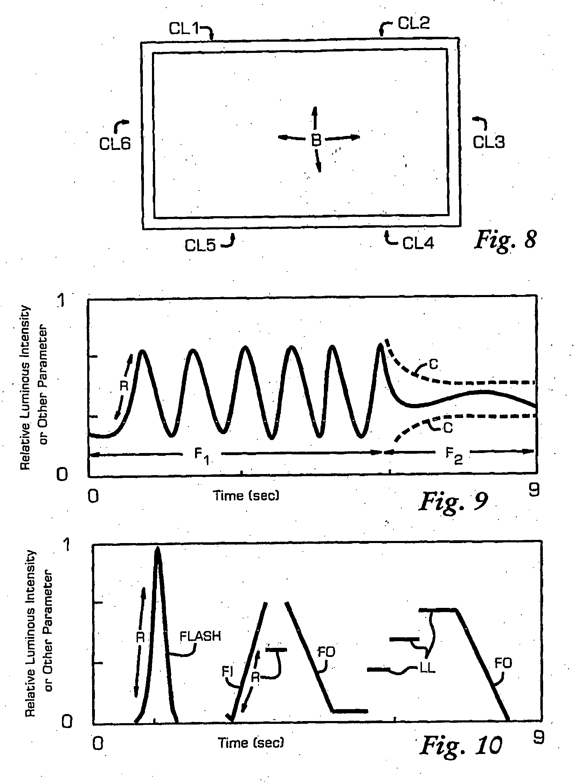

The following definitions shall be used throughout:
- **Ambient light source -** shall, in the appended claims, include any lighting production circuits or drivers needed to decode a light script code for use thereby.
- **Ambient space -** shall connote any and all material bodies or air or space external to a video display unit.
- **Change Code -** shall include encoded parameters or code which specify or can allow derivation of the time evolution of an ambient lighting effect according to the invention. A change code can comprise either both of a **change type** and **a rate parameter.**
- **Change type -** shall denote a type of evolution for an operating parameter or parameters which can be described as a function or an operator in any mathematical space. Change types include simple changes such as fade in or fade out where a quantity is ramped upward or downward; a sinusoidal variation; a trigonometric functional variation; a sudden increase or spike; a complex waveform; a specified function of the operating parameter; and a limiting function or envelope. Change types can include pauses, truncations, and combinations of change types, such as the modulated sinusoidal function shown in Fig. **9** which is constrained by an envelope. All that is required is a definition of the change type to be recognized and acted by a decoding or similar circuit, processor or memory. A function or operator representing a change type can make use of a rate **parameter**.
   -- **Chrominance** - shall, in the context of driving an ambient light source, denote a mechanical, numerical, or physical way of specifying the color character of light produced, and shall not imply a particular methodology, such as that used in NTSC or PAL television broadcasting.
   -- **Computer -** shall include not only all processors, such as CPU's (Central Processing Units) that employ known architectures, but also any intelligent device that can allow coding, decoding, reading, processing, execution of setting codes or change codes, such as digital optical devices, or analog electrical circuits that perform the same functions.
- **Content carrier -** shall denote any of a number of content carrying sources of data, such as an audio-visual carrier, including broadcast video/audio; internet or network communications; cable or satellite transmissions; optical communications, etc., whether operated in synchronous or asynchronous mode.
- **Controlled operating parameter -** shall denote a parameter encoded as a representation of a physical quantity or physical variable, such as a luminance, a chrominance, or a light character index such as a delivery angle or a goniophotometric index.
   -- **Goniochromatic -** shall refer to the quality of giving different color or chromaticity as a function of viewing angle or angle of observation, such as produced by iridescence.
- **Goniophotometric -** shall refer to the quality of giving different light intensity, transmission and/or color as a function of viewing angle or angle of observation, such as found in pearlescent, sparkling or retroreflective phenomena.
- **Light character -** shall mean, in the broad sense, any specification of the nature of light such as produced by an ambient light source. In the appended claims, light character shall denote all descriptors other than luminance and chrominance, such as the degree of light transmission or reflection; or any specification of goniophotometric qualities, including the degree to which colors, sparkles, or other known phenomena are produced as a function of viewing angles when observing an ambient light source; a light output direction, including directionality as afforded by specifying a Poynting or other propagation vector;
or specification of angular distribution of light, such as solid angles or solid angle distribution functions. It can also include a coordinate or coordinates to specify locations on an ambient light source, such as element pixels or lamp locations.
- **Luminance -** shall denote any parameter or measure of brightness, intensity, or equivalent measure, and shall not imply a particular method of light generation or measurement, or psycho-biological interpretation.
- **Range of values -** as in the appended claims shall denote a continuous or discontinuous functional set of values for a parameter, such as a sinusoidal or other functional form, and/or a set of distinct values. This is in contrast to a mere single increment or step, such as changing a lamp voltage from 8 volts to 10 volts, or from 8.01 volts to 8.02 volts. Range of values shall thus denote more than one step, or a continuous change, such as a controlled operating parameter that is sinusoidal, spiked, faded-in/faded-out, or a plurality of pre-scripted steps.
- **Rate Parameter -** shall denote any single parameter that helps specify or specifies a change in a **controlled operating parameter**, such as an argument of a function, such **as 2** in sin2; a fade in time period over which a fade in or fade out occurs (e.g., T=10 seconds); a magnitude of a function, such as K in F=Ksint; a phase of a function, such as N in Fsin(Nt + b); an off time period; and an on time period, and a step frequency (e.g., Hertz).
- **Setting Code -** shall include encoded parameters or code which specifies or can allow derivation of the initial settings for ambient lighting effects according to the invention. A setting code can comprise any of **luminance**, a **chrominance**, and **light character.**
- **Time -** shall be understood such that a specific time, such as a stop time for a special effect, can be either specified in absolute terms by appropriate encoding, or alternatively, can be encoded by an implied change type, a rate parameter or an evolution profile. For example, a stop time for a fade-out of known duration is implied when the rate parameter for the fade-out is specified, e.g., a 10 second fade-out.
- **Video -** shall denote any visual or light producing device, whether an active device requiring energy for light production, or any transmissive medium which conveys image information, such as a window in an office building, or an optical guide where image information is derived remotely.
- **Video aignal -** shall denote the signal or information delivered for controlling a video display unit, including any audio portion thereof. It is therefore contemplated that video content analysis includes possible audio content analysis for the audio portion.

Light script command encoding according to the invention is designed to allow, if desired, a high degree of specificity of degrees of freedom for ambient lighting. This light command encoding would be capable of encoding both initial settings and time evolution for the character of light produced by one or a plurality of individual light sources, including specifying any or all of luminance, chrominance and light character as defined in the definitions section of this disclosure. Possible light sources for ambient lighting can include any number of known lighting devices, including LEDs (Light Emitting Diodes) and related semiconductor radiators; electroluminescent devices including non-semiconductor types; incandescent lamps, including modified types using halogens or advanced chemistries; ion discharge lamps, including fluorescent and neon lamps; lasers; light sources that are modulated, such as by use of LCDs (liquid crystal displays) or other light modulator; photoluminescent emitters, or any number of known controllable light sources, including arrays that functionally resemble displays.

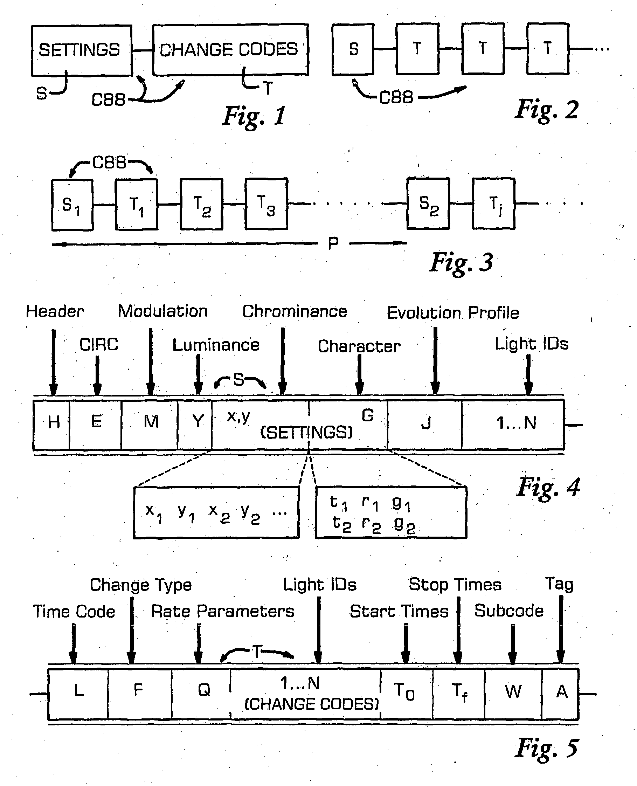

Referring now to FIG. **1**, a schematic diagram of a two-element light script code according to the invention is shown. Light script code **C88** is contemplated to comprise two parts: a setting code **S**, and a change code **T** as shown, where the horizontal placement implies a time progression starting from the left. Light script code **C88** is encoded using known techniques and decoded for use by an ambient lighting system. Setting code **S** and change code **T** can be separately interpretable and self-sufficient, not needing the other for an intended response by an ambient lighting system (not shown). In setting code **S**, initial settings, including any information needed for startup, such as a flash recharge signal for a flash lamp, are given. In change code **T**, a description of the desired changes of each light setting or effect over time are given, where the initial settings specified by setting code **S** can remain in place, or be superceded, if desired.

As for the type of encoding, any number of known communication methods can be employed, using any type of signal, such as radio frequency signals using any number of known modulation techniques; electrical signals, including analog and quanitized analog waveforms; digital (electrical) signals, such as those using pulse-width modulation, pulse-number modulation, pulse-position modulation, PCM (pulse code modulation) and pulse amplitude modulation; or other signals such as acoustic signals, audio signals, and optical signals, all of which can use digital techniques. Data that is merely sequentially placed among or with other information, such as in computer-based applications, can be used as well.

Now referring to FIGS. **2** and **3**, schematic diagrams for sequences of setting code **S** and change code **T** are shown. In the scheme according to the invention, it is contemplated that light script code C88 shall comprise a setting code **S** followed by a number of change codes **T** as shown in **FIG. 2**. Thus, while the data or bit stream required to initialize a set of individual ambient lights in an ambient lighting system might be very large, it is not repeated for the sake of updating lamp or light source operation. Sequences of change codes **T** can be encoded and utilized as frequently as desired. As shown in **FIG. 3**, light script code **C88** can comprise a sequence that includes a setting code **S₁**, followed by a sequence of change codes **T₁**, **T₂, T₃** ... etc. which specify only changes and time evolution parameters for ambient lighting effects that depart from those specified by setting code **S₁**. For system robustness one can have some redundancy by retransmitting setting code **S₁**, or a second setting code **S₂**, from time to time, including periodically after time period **P** as shown, e.g., each second, to allow for channel or program changes, in analogy to periodic transmission of intraframe coding used for video and audio compression technologies, e.g., ATSC DTV (Digital Television). Alternately, **S₂** can be updated to reflect recent changes specified by change codes **T₁, T₂**, **T₃** ... etc. Also, if desired, change codes **Tₓ** can be absent, to allow periodic resetting of setting codes only.

Referring now to **FIG. 4**, a schematic representation of possible elements of a setting code **S** according to the invention are shown for illustrative purposes using known digital data frames or packets like those used for MPEG encoding, audio PCM encoding, etc.; one can use known encoding schemes for data packets such as program streams with variable length data packets, or transport streams which divide data packets evenly, or other schemes such a single program transport streams. Alternately, the data frames given in this disclosure can be emulated using computer code and other communications standards, including asynchronous protocols.

Setting code **S** is formed using a known packetizer or encoder (not shown) and comprises a header **H** which can contain such as addressing bits, routing, origination time and other data. Header **H** is followed by optional error correction **E**, such as CIRC (Cross-Interleave Reed-Solomon Code) to allow correction of bad bits and increase probability of accuracy; and optional modulation **M** bits which can be needed or advantageous as known in the art. The use of error correction codes and interleaving of data is known in the art. In the case of computer code-generated encoding or software that emulates that shown here, error correction and modulation may not be necessary, or may be provided elsewhere via some other means.

Next, various ambient light source initial controlled operating parameters are encoded which represent at least one of general categories luminance **Y**, chrominance (**x, y**), and light character **G** as defined in the Definitions section. Typically these quantities will be defined for a number of individual light sources 1 - N, but that does not have to be the case. The luminance **Y** can be a luminance factor Y (CIE tristimulus Y) or any other factor which encodes brightness, intensity, beam current, filament current, electron density or any other quantity in the ambient light source which specifies luminosity or any equivalent quantity. A single parameter can be used for each individual ambient light unit, or for non-monochromatic light sources, the luminance **Y** can be specified for each tristimulus chromaticity, but under the ASTM/CIE system this is not normally needed.

In a similar manner, the chrominance (**x, y**) can be specified using the two CIE chromaticities x and y, or using any other tristimulus or multistimulus system. As shown, such chromaticities can be encoded as an initial setting for each light source, namely, x₁, y₁, x₂, y₂... as shown, with a corresponding set of luminances Y₁, Y₂... as needed (not shown) to give a full 3 coordinate specification (e.g., hue, saturation and brightness) for the ambient light unit under the CIE color system.

Finally, any number of initial light character variables can be set using any number of initial controlled operating parameters that are encoded in light character **G** as shown. As an example, as will be discussed further below, light character **G** can comprise a transmission coefficient **t** which can specify how much light is allowed to exit a light modulator in the ambient light unit; a reflection coefficient r which can specify how much light is allowed to be reflected from a light modulator; and a goniophotometric variable, aspect coefficient, or tensor **g** which specifies a controllable physical variable or end result from goniophotometric behavior, where the character (color, intensity, etc.) of the ambient light produced from the ambient light unit is as a function of viewing angle or angle of observation, such as found in pearlescent, sparkling or retroreflective articles.

Light character **G** can also be encoded to specify light direction and distribution information, as alluded to in the Definitions section of this disclosure. This would involve additional variables or controlled operating parameters (not shown).

Differing desired specificity, complexity, and degrees of freedom in specifying setting codes can be upwardly compatible, e.g., luminance **Y** can be the only parameter used, with chrominance parameters discarded or unused. Similarly, any or all of controlled operating parameters specified in light character encoding **G** can be discarded or ignored.

Setting code **S** can also comprise an evolution profile **J** as shown which functions as an optional element that functions in a manner similar to the change type **F** as found in the change code **T** and is more fully discussed below. Evolution profile **J** can, in functionality, take the place of the change type **F** in the change code **T** of Fig. **5**, or alternatively can help characterize anticipated duty the ambient light will perform. In the case of a flash unit, the evolution profile **J** can act as an early signal to a ambient lighting flash unit to prepare for a flash or flashes generally, such as by charging up a capacitor or energy storage device, or by activating discharge circuitry. It can also allow activation or turn-on of ambient light circuits in general.

Finally, setting code **S** can comprise further information about light ID (identifications) where ambient light units are identified. For example, the previous encoded variables luminance **Y**, chrominance (**x, y**), and light character **G** can be encoded for a large number of light simultaneously by simply listing the applicable light IDs after selected setting data. This provides a more economical bit stream to reduce data overhead. Alternately, the encoded controlled operating parameters can be ordered by light ID, with the selected light IDs following in the same order. A third possible method is to encode operating parameters adjacent to each light ID that is specified in the setting code **S**. The order of the encoded parameters can be changed and re-arranged as desired, or the order can be specified in header **H**.

The need for many such physical variables in a simple ambient lighting system is less than that for a sophisticated one, but it is important to note why light character phenomena such as directional effects or goniophotometric effects (e.g., goniochromatic effects, where color changes as a function of viewing angle, such as found in iridescence) should be accounted for in an ambient lighting script command encoding system.

Generally, ambient light sources can embody various diffuser effects to produce light mixing, as well as translucence or other phenomena, such as by use of lamp structures having a frosted or glazed surface; ribbed glass or plastic; or apertured structures, such as by using metal structures surrounding an individual light source. To provide interesting effects, any number of known diffusing or scattering materials or phenomena can be used, including that obtain by exploiting scattering from small suspended particles; clouded plastics or resins, preparations using colloids, emulsions, or globules 1-5 :m or less, such as less than 1 :m, including long-life organic mixtures; gels; and sols, the production and fabrication of which is known by those skilled in the art. Scattering phenomena can be engineered to include Rayleigh scattering for visible wavelengths, such as for blue production for blue enhancement of ambient light. The colors produced can be defined regionally, such as an overall bluish tint in certain areas or regional tints, such as a blue light-producing top section on a floor mounted ambient lamp.

Ambient lamps can also be fitted with a goniophotometric element, such as a cylindrical prism or lens which can be formed within, integral to, or inserted within a lamp structure. This can allow special effects where the character of the light produced changes as a function of the position of the viewer. Other optical shapes and forms can be used, including rectangular, triangular or irregularly-shaped prisms or shapes, and they can be placed upon or integral to an ambient light unit or units. The result is that rather than yielding an isotropic output, the effect gained can be infinitely varied, e.g., bands of interesting light cast on surrounding walls, objects, and surfaces placed about an ambient light source, making a sort of light show in a darkened room as the scene elements, color, and intensity change on a video display unit. The effect can be a theatrical ambient lighting element which changes light character very sensitively as a function of viewer position - such as viewing bluish sparkles, then red light - when one is getting up from a chair or shifting viewing position when watching a home theatre. The number and type of goniophotometric elements that can be used is nearly unlimited, including pieces of plastic, glass, and the optical effects produced from scoring and mildly destructive fabrication techniques. Ambient lamps can be made to be unique, and even interchangeable, for different theatrical effects. And these effects can be modulatable, such as by changing the amount of light allowed to pass through a goniophotometric element, or by illuminating different portions (e.g., using sublamps or groups of LEDs) of an ambient light unit. Thus, by selecting whether or not to illuminate a particular light source, one can select a light character variable such as directionality or a goniophotometric effect.

Not shown in setting code **S** and change code **T** are any needed synchronization bits and concatenation bits; parity bits; added interleaving; and any special modulation needed to encode the setting and/or change codes onto a computer readable medium, such as EFM (eight to fourteen modulation) used for compact discs. Also not shown are any needed clock synchronization bits, or bits needed for digital sum value management, burst headers, desired metadata such as a description of the ambient lighting effect (e.g., "lightning storm"; "sunrise"; etc.).

Now referring to FIG. **5**, a schematic representation of possible elements of a change code according to the invention are shown. After decoding and use of the setting code **S** shown in FIG. **4**, an ambient light source can proceed with broadcasting ambient light, applying the initial controlled operating parameters as given. Using this scheme, open or adjustable variables in setting code **S** are changed, or functional changes thereto are specified or established, when warranted by a change code **T**.

In one embodiment, the elements illustratively shown in change code **T** can be part of setting code **S**; in another, they are separate, and trailing, such as shown in FIG. **2**.

Change code **T** can comprise a time code **L** as shown, which can encode any number of known ways to synchronize content with other data streams such as video embodied in broadcast signals, MPEG formats, etc. Time code **L** can also be part of setting code **S**, if desired (not shown). Required elements in change code **T** are one or both of change type **F** and rate parameter **Q**, as shown. Light IDs can again be specified as before, and optionally additional specific rate parameters can be added, such as start times **Tₒ** and stop times **T_{f}**. Optionally, subcode **W** can be an added element, allowing metadata or data set aside for some future use. An optional tag or flag **A** can allow labeling of change code **T**, for use in lookup tables, history tables, or other monitoring functions.

Rather than broadcast to all ambient light units that may be part of an ambient light source a full description of controlled operating parameters as given in setting code **S** above, only information relating to time evolution or changes to the initial settings are given, and in such a way so as to allow the ambient light source to execute the changes itself, changing one or more controlled operating parameters through a range of values without further command encoding, as will be discussed in **FIGS. 9 - 11****.**

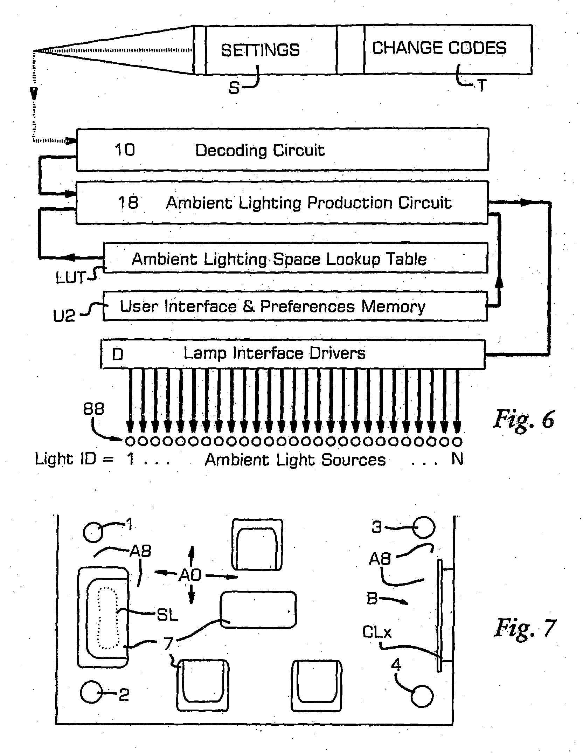

As a simple example, change types that encode changes in luminance **Y**, such as a fade in or a fade out over a specified time (e.g., 10 seconds), can be specified, as well as sinusoidal or other trigonometric functional outputs, or other functional changes, as given in the Definitions section. Similarly, rate parameters **Q** can give an argument or arguments of a function, such as theta (2) to acted upon by a change type, such as a function **F** = sin2. In the case of a fade-in over a ten second interval, essentially a linear ramp up, the fade-in can be a change type, while the rate parameter can be 10 seconds, or alternatively the reciprocal, 1/(10)(seconds). Such rate parameters **Q** can comprise a parameter that specifies a declining or opening intensity envelope, e.g., x in the function e^-x, or they can include an argument of a transform function, such as a cosine or Fourier transform. Change types **F** are encoded using labels so as to be recognized by a decoding circuit discussed in FIG. **6**, and can themselves include, by design or default, a rate parameter. For example, fade-ins, sinusoidal ramp-ups, and steps can each be assigned a single byte value to be recognized by decoding circuit **10**. The light setting information can be of a similarly economical character, using only the minimum number of bytes needed. Luminance, for example, can be encoded in a known manner using a byte value ranging from one to 2^9 or 512. One possible default condition for change code **F** can be a zero value, namely F = 0, meaning no change in light character until reset using a setting code or another change code.

Using known encoding techniques, one can use run-length encoding to further compress change code effectiveness, and known entropy encoding can be used to compress further, allowing that frequently used change types or rate parameters are encoded using fewer bits that infrequently used change types or rate parameters.

Now referring to **FIG. 6**, a schematic diagram of a possible system utilizing the light script code of the invention to control multiple ambient light sources is shown. Setting code **S** and change code **T** (shown, **SETTINGS** and **CHANGE CODES**, respectively) are passed to a decoding circuit **10**, which using known techniques, decodes the light script code **C88**, including any error correction or entropy decoding processes, to provide raw information about controlled operating parameters to govern ambient light source **88** which comprises ambient light units **1** - **N** as shown.

Decoding circuit **10** can comprise a de-compression engine, and one or more channel buffers of known design can be used (not shown) to manage the bit stream that conducts setting code **S** and change code **T**.

Decoding circuit **10** can be functionally contained in a computer system which uses software to perform the same functions, but in the case of decoding packetized information sent by a data transmission protocol, there could be memory (not shown) in the decoder circuit which contains, or is updated to contain, information that correlates to setting code and/or change code information, so that a simple encoded hexadecimal byte, for example, can correspond to a fade-in, with another byte specifying a start or stop time. This memory can then, in conjunction with a processor and software, translate the initial settings, change types, and rate parameters to actual controlled operating parameters that can be communicated to a ambient lighting production circuit **18** as shown. Ambient lighting production circuit **18** takes controlled operating parameters obtained from decoding circuit **10** and then accounts for any input from any user interface and any resultant preferences memory (shown together as **U2**) to develop actual light output controlling parameters (such as applied voltages) after possibly consulting an ambient lighting space lookup table **LUT** as shown, which takes any color space specified by the controlled operating parameters established by setting code **S** and change code **T** into any color space of ambient light source **88** or individual ambient light units **1 - N**. Armed with this information, ambient lighting production circuit **18** can then instruct lamp interface drivers **D** to directly control or feed ambient light source **88** as shown. This information can be sent to an interface unit, e.g., a DMX-512 interface, if desired.

Now referring to **FIG. 7**, a downward view - part schematic and part cross-sectional - is shown of a room or ambient space **AO** in which ambient light from multiple ambient light sources is produced using a light script according to the invention. In ambient space **AO** is arranged seating and tables **7** as shown which are arrayed to allow viewing of video display **B**. In ambient space **AO** are also arrayed a plurality of ambient light units to be controlled using the instant invention, including light speakers **1 - 4**, as well as a sublight **SL** under a sofa or seat, as well as a set of special emulative ambient light units arrayed about display **B**, namely center lights **CLx.** Each of these ambient light units can emit ambient light **A8**, shown as shading in the figure. Referring now to **FIG. 8**, a schematic surface view video display **B** is shown with six ambient light units **CL1 - CL6** arrayed about areas of the display. It is anticipated, though not required, that a particular area, such as the upper left of display **B** as shown will influence the ambient light scripted and produced by an adjacent ambient light unit, such as **CL1** as shown.

Using light script command encoding, and in particular, encoding of light character parameters, one can produce ambient light from these ambient light units with colors or chromaticities derived from, but not actually broadcast by video display **B**. This allows exploiting characteristics of the human eye and visual system. It should be noted that the luminosity function of the human visual system, which gives detection sensitivity for various visible wavelengths, changes as a function of light levels.

For example, scotopic or night vision relying on rods tends to be more sensitive to blues and greens. Photopic vision using cones is better suited to detect longer wavelength light such as reds and yellows. In a darkened home theatre environment, such changes in relative luminosity of different colors as a function of light level can be counteracted somewhat by modulating or changing color delivered to the video user in ambient space. This can be done by subtracting light from ambient light units such as light speakers **1-4** using a light modulator (not shown) or by use of an added component in the light speakers, namely a photoluminescent emitter to further modify light before ambient release. The photoluminescent emitter performs a color transformation by absorbing or undergoing excitation from incoming light from light source and then re-emitting that light in higher desired wavelengths. This excitation and re-emission by a photoluminescent emitter, such as a fluorescent pigment, can allow rendering of new colors not originally present in the original video image or light source, and perhaps also not in the range of colors or color gamut inherent to the operation of the display **B**.

The production of new colors can provide new and interesting visual effects. The illustrative example can be the production of orange light, such as what is termed hunter's orange, for which available fluorescent pigments are well known (see ref[2]). The example given involves a fluorescent color, as opposed to the general phenomenon of fluorescence and related phenomena. Using a fluorescent orange or other fluorescent dye species can be particularly useful for low light conditions, where a boost in reds and oranges can counteract the decreased sensitivity of scotopic vision for long wavelengths.

Fluorescent dyes that can be used in ambient light units can include known dyes in dye classes such as Perylenes, Naphthalimides, Coumarins, Thioxanthenes, Anthraquinones, Thioindigoids, and proprietary dye classes such as those manufactured by the Day-Glo Color Corporation, Cleveland, Ohio, USA. Colors available include Apache Yellow, Tigris Yellow, Savannah Yellow, Pocono Yellow, Mohawk Yellow, Potomac Yellow, Marigold Orange, Ottawa Red, Volga Red, Salmon Pink, and Columbia Blue. These dye classes can be incorporated into resins, such as PS, PET, and ABS using known processes.

Fluorescent dyes and materials have enhanced visual effects because they can be engineered to be considerably brighter than nonfluorescent materials of the same chromaticity. So-called durability problems of traditional organic pigments used to generate fluorescent colors have largely been solved in the last two decades, as technological advances have resulted in the development of durable fluorescent pigments that maintain their vivid coloration for 7-10 years under exposure to the sun. These pigments are therefore almost indestructible in a home theatre environment where UV ray entry is minimal.

Alternatively, fluorescent photopigments can be used, and they work simply by absorbing short wavelength light, and re-emitting this light as a longer wavelength such as red or orange. Technologically advanced inorganic pigments are now readily available that undergo excitation using visible light, such as blues and violets, e.g., 400-440 nm light.

Other light character parameters that can be specified, as mentioned above, are goniophotometric and goniochromatic effects to produce different light colors, intensity, and character as a function of viewing angles. To realize this effect, ambient light units **1-4** and **SL** and **CLx** can use known goniophotometric elements (not shown), alone, or in combination, such as metallic and pearlescent transmissive colorants; iridescent materials using well-known diffractive or thin-film interference effects, e.g., using fish scale essence; thin flakes of guanine; or 2-aminohypoxanthine with preservative. Diffusers using finely ground mica or other substances can be used, such as pearlescent materials made from oxide layers, bornite or peacock ore; metal flakes, glass flakes, or plastic flakes; particulate matter; oil; ground glass, and ground plastic.

Light character **G** can, for example, be encoded to modulate a goniophotometric element to change the character of light produced thereby, such as a motorized goniophotometric element which changes the angle of an internal optical element (not shown). The encoded parameter can be a simple angle 2.

Now referring to FIGS. **9** - **11**, cartesian plots of execution of controlled light character parameters as a function of time are shown, for an ambient light source under control of a light script code where a change code has been specified. In FIG. **9**, for example, Relative Luminous Intensity or some other controlled operating parameter in an ambient light source **88** or an ambient light unit such as light speaker **1** is plotted on the abscissa as a function of time in seconds. An intensity value of approximately 0.25 is shown at the left side, representing a value that has been specified by setting code **S**. A function **F**₁ as shown on the left portion of the plot modulates this value in a quasi-sinusoidal manner. For example, a change type **F** can be specified to be a sinusoidal function such as y = msinNt, where t is time in seconds, and additionally where a magnitude m and a phase N are slightly varied from cycle-to-cycle. This change type can be used, for example, to provide a syncopated or irregular accompaniment to a musical beat found in a video signal or program. Function **F₁** as shown can be followed by function **F₂**, which can, as illustratively shown, superimpose function **F₁** with a limiting function or envelope **C** as shown, which can act as a multiplier to dampen function **F₁**. These functions are encoded in change code **T** under change type **F**, possibly with rate parameters **Q** specifed as well.

Decoding circuit **10** is adapted to recognize change type **F** and any rate parameter **Q** so that the change encoded and displayed can go through a range of values, shown as **R**, without further light script command encoding.

As mentioned above, other functions can be specified, such as flash and step functions shown in FIG. **10**. A spike or flash (shown **FLASH**), can instruct the light script decoding circuit to execute a flash or high intensity spike as shown, where again, a range of values **R** as shown is executed automatically with further encoding to specify values or to specify an interpolated progression. Similarly, a fade-in **FI** or fade-out **FO** as shown can be executed, and can include a step shown therebetween, all exhibiting a progression through a range of values **R** as-shown. A step as shown can be effect through a change type **F** that is essentially an operator that takes a base value and adds (or subtracts) a set value from the controlled operating parameter. This step operator can be specified in a library of change types F that are encoded, recognized, or accessed by decoding circuit **10** as shown in FIGS. **6****,** **12****,** **13**. Further to the right on the figure, a series of steps LL are shown, with a final fade-out **FO** shown. For a step, a step operator can be the change type **F**, and the step size can be the rate parameter **Q**. Each of these changes can be specified in logical pieces, or a prescripted or oft-used set of changes can be encoded using a change type **F** and/or a rate parameter **Q**. Decoding circuit **10** or the equivalent in software can be initialized in a known manner to contain a library of change types F and/or rate parameters **Q**, and the evolution profile **J** of setting code **S** can perform this function.

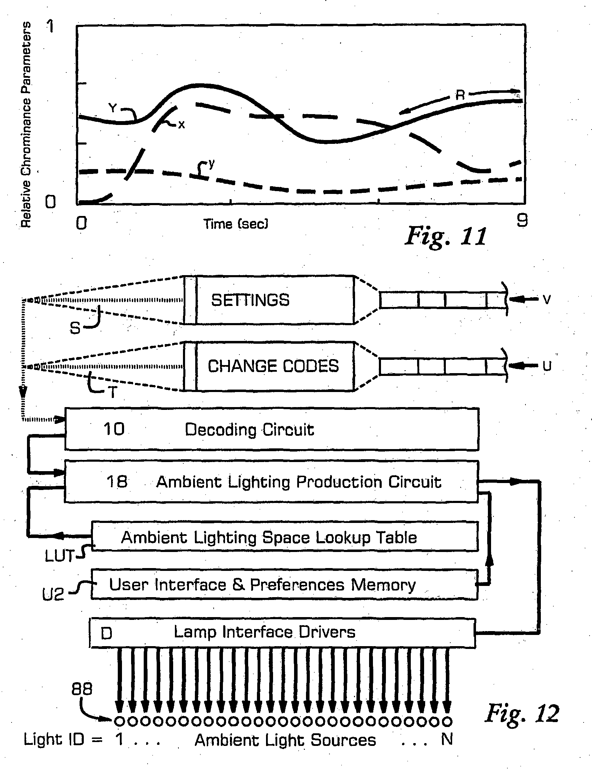

FIG. **11** shows three Relative Chrominance Parameters **Y, x, y,** as shown plotted against time, where a complex functional relationship is shown, where again, a range of values **R** for each parameter is realized with further encoding needed. It is important to note that change type **F** can represent any mathematical function - continuous or not - and any relevant mathematical or logical operator - so long as decoding circuit **10** can recognize it and allow execution of the required changes to the controlled operating parameter or parameters being addressed to affect an ambient light source.

Referring now to FIG. **12**, a schematic diagram of a possible system utilizing a two-part light script code from two distinct signal sources to control multiple ambient light sources is shown. Signal source **U**, such as a media signal (e.g., DVD playback) can produce change codes **T** as shown; this can be combined with a second signal source **V**, like a content carrier, which can take many forms, such as broadcast radio frequency analog waveforms, or digital information gleaned from cable or satellite broadcasts, where the setting codes **S** can be sent. As shown, setting codes **S** and change codes **T** can be multiplexed and share the same communication channel as shown.

Setting code **S** and change code **T** can come from different sources at different times, such as through a network. Such a network can comprise an OSI (open system interconnection) network model, where data transmission can have known physical, data link, network, transport, session, presentation, and application layers, and where periodic sessions can access one or both of setting code **S** and change code **T** during viewing or playback of a video program.

In particular, the setting code **S** and change code **T** can be delivered to an end user in such a way as to minimize the bit stream required for a subscription satellite or cable service, or any network delivery system, and in such a way to maximize success of a business model that supports delivery of proprietary content. Time code **L** embedded in setting code **S** or change code **T** (as shown) allows synchronization with video or other content.

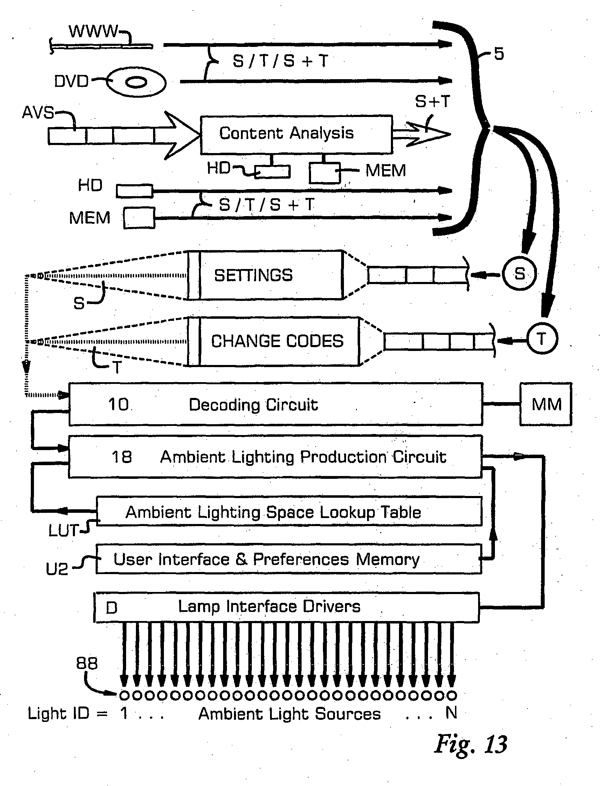

Referring now to FIG. **13**, a schematic diagram of a possible system utilizing a two-part light script code from open or multiple signal sources to control multiple ambient light units.

As shown, any of a number of signal or information inputs can be used to provide setting codes **S** and change codes **T** communicated separately if desired. Communication of setting codes **S** and change codes **T** can be delivered by a content carrier, a synchronous data carrier, an asynchronous data carrier, or a computer-readable medium. For example, internet-based information transfer **www** (downloading from a proprietary site, for example) or retrieval from a computer-readable medium **DVD**, such as a Digital Versatile Disc or portable memory card, as shown can individually deliver one or both of setting code **S** and change code **T -** simultaneously or through a known data buffer. Alternatively, an audio-visual signal **AVS** from a delivery system can undergo video content analysis (shown, **Content Analysis**) using known methods to record and transfer light script commands (setting code S and change code **T** as shown) to and from a hard disk **HD**, possibly using a library of change types **F** or rate parameters **Q** stored in a memory **MEM** as shown. This can allow independent, parallel, direct, delayed, continuous, periodic, or aperiodic transfer of light script commands from hard disk **HD** and/or memory **MEM** as shown, with the result that setting codes **S** and change codes **T** can be part of a flexible, open or multiple data stream **5** and can be transmitted, stored, retrieved and used in a flexible or desired manner, using one or more sources. This can include getting setting codes S from a publically available source, such as internet **www**, and getting change codes **T** from a proprietary source such as audio-visual signal **AVS**. If necessary, decoding circuit **10** can comprise a decoder lookup memory **MM** as shown to interpret change types **F** and rate parameters **Q**, allowing that complex waveforms or mathematic operations (see FIG. **9**) can be executed without having to retransmit or generate constant re-adjustment of setting codes **S**.

This saves on bit streams or the equivalent that are required, relative to a simple light specification system, like that using the DMX-512 protocol, that needs constant refreshing and specification of needed movements of controlled operating parameters such as luminance, chrominance, light character, etc.

A simple example is a traditional system that specifies just one controlled operating parameter, such as luminance for a particular ambient light unit. In order to execute a sinusoidal variation of 5 seconds duration, such as an increase in illumination during a sun rise, a single light script command, it might be necessary to transmit 4 bytes (assuming a very simple data structure) to update lamp luminance. Updating 80 times per second to trace out and specify a sinusoidal variation might then take 4 bytes/update x 80 updates/sec x 5 seconds, or 1600 bytes. Using a system of the present type might achieve the same result using 40 bytes, by specifying a setting code S followed by a single change code **T** that specifies a change type **F** of a sinusoidal function, followed by rate parameters that in turn specify the period and magnitude of the sine function. This savings in bytes needed to effect such a change allows encoding light script information in compact data spaces, such as subcode on computer-readable media (e.g., compact discs) and ancillary data spaces, etc.

One can encode pixel location information in setting code **S**, as well as change code **T**, in lieu of, or in addition to, lamp IDs **1...N**. This would allow specifying selective changes to lamp controlled operating parameters on an array, such as an LED (light emitting diode) array.

Using the User Interface & Preferences Memory **U2** as shown, the ambient lighting production circuit **18** can provide the possibility of various desired effects, based on user preferences, which can also be downloaded using a central place, e.g., satellite system into active frame system memory. The User Interface can be used to change preferences regarding the system behavior, such as changing the degree of color fidelity to the video content of video display **B** desired; changing flamboyance, including the extent to which any fluorescent colors or out-of-gamut colors are broadcast into ambient space, or how quickly or greatly responsive to changes in video content the ambient light is, such as by exaggerating the intensity or other quality of changes in the light script command content. This can include advanced content analysis which can make subdued tones for movies or content of certain character. Video content containing many dark scenes in content can influence behavior of the ambient light source **88**, causing a dimming of broadcast ambient light, while flamboyant or bright tones can be used for certain other content, like lots of flesh tone or bright scenes (a sunny beach, a tiger on savannah, etc.). This can be accomplished using setting code S and change code T as they are written or produced, with the desired changes being effected by ambient lighting production circuit **18** without further light script command encoding required.

One can also embed light script command codes of the type taught here into the subcode of media such as compact discs, or DVD (digital versatile discs), with or without the additional requirement of additional information being needed for full production of light effects. The modular design of the light script command encoding using the separable setting code **S** and change code **T** taught here enables such flexibility.

The description is given here to enable those of ordinary skill in the art to practice the invention. Many configurations are possible using the instant teachings, and the configurations and arrangements given here are only illustrative, and in particular are simplified for clarity. In practice, ambient light script encoding according to the invention might appear as part of a larger system, such as an entertainment center or home theatre center. Nothing precludes use of this system to encode only one controlled operating parameter, such as luminance.

It is well known that for the data frames or packets shown illustratively here can be functionally reproduced or emulated using software or machine code, and those of ordinary skill in the art will be able to use these teachings regardless of the way that the encoding and decoding taught here is managed

Those with ordinary skill in the art will, based on these teachings, be able to modify the apparatus and methods taught and claimed here and thus, for example, re-arrange steps or data structures to suit specific applications, and creating systems that may bear little resemblance to those chosen for illustrative purposes here.

The invention as disclosed using the above examples may be practiced using only some of the features mentioned above. Also, nothing as taught and claimed here shall preclude addition of other structures or functional elements.

Obviously, many modifications and variations of the present invention are possible in light of the above teaching. It is therefore to be understood that, within the scope of the appended claims, the invention may be practiced otherwise than as specifically described or suggested here.

## Claims

1. A method for light script command encoding for dynamically controlling an ambient light source (88), comprising:
[1] Encoding a setting code (S) usable by said ambient light source to specify at least one controlled operating parameter that comprises at least one of a luminance (Y), a chrominance (x, y), and a light character (G); **characterized in that** the method further comprises:
[2] Encoding a change code (T) usable by said ambient light source to specify at least one change in said controlled operating parameter, said change code comprising at least one of a change type (F) and a rate parameter (Q); and said setting code and said change code each so formulated that said ambient light source using the same and so dynamically controlled can fully execute said change through a range of values (R) of said controlled operating parameter without further command encoding.

2. The method of claim **1**, wherein said ambient light source comprises a plurality of individual light sources (3, **CL1**) and wherein said setting code is further encoded to specify said controlled operating parameter for any of a plurality of light **IDs** (**1 ... N**), each corresponding to one of said individual light sources.

3. The method of claim 1, wherein said ambient light source comprises a plurality of individual light sources (**3, CL1**) and wherein said change code is further encoded to specify said change in said controlled operating parameter for any of a plurality of light IDs (**1 ... N**), each corresponding to one of said individual light sources.

4. The method of claim **1**, further comprising:
[3] encoding a second change code (**T2**) usable by said ambient light source to specify at least one second change in at least said controlled operating parameter, said second change code comprising at least one of a second change type and a second rate parameter; said setting code and said second change code each so formulated that said ambient light source so dynamically controlled can fully execute said second change without further command encoding.

5. The method of claim **4**, further comprising:
[4] encoding a repeat of said setting code formulated to be usable by said ambient light source after said second change code.

6. The method of claim **1**, wherein said change code is so formulated as to further encode at least one of a start time and a stop time for said change.

7. The method of claim **1**, wherein the change code comprises a change type that specifies said change in said controlled operating parameter, wherein said change type comprises at least one of: a fade in; a fade out; a sinusoidal output; a trigonometric output; a spike; a waveform; a specified function (**F1**) of said operating parameter; an operator; and an envelope (**C**).

8. The method of claim **1**, wherein the change code comprises a rate parameter that specifies said change in said controlled operating parameter, wherein said rate parameter comprises at least one of: an argument of a function (**2**); a fade in time period over which a fade in occurs; a fade out time period over which a fade out occurs; a magnitude of a function; a phase of a function; an off time period; an on time period; and a step frequency.

9. The method of claim **1**, further comprising entropy encoding of at least part of at least one of said setting code and said change code.

10. The method of claim **1**, further comprising recording a script comprising at least one of said setting code and said change code into packetized data (**S, T**).

11. The method of claim **10**, further comprising transmitting said script over at least one of a content carrier, synchronous data carrier and an asynchronous data carrier, and decoding said script to allow said dynamic control of said ambient light source.

12. The method of claim **1**, further comprising recording a script comprising at least one of said setting code and said change code onto a computer-readable medium (**DVD**).

13. The method of claim **12**, further comprising reading said script on said computer-readable medium (**DVD**) during a display of video content.

14. The method of claim 1, further comprising recording a script comprising said setting code and said change code into packetized data (**S, T**), said packetized data so formulated so as to allow separate communication of said setting code and said change code.

15. A method for dynamically controlling an ambient light source using light script command encoding, comprising:
[1] decoding a setting code that specifies settings usable by said ambient light source;
[2] using said decoding of said setting code to specify at least one controlled operating parameter that comprises at least one of a luminance (Y), a chrominance (x, y), and a light character (G);
[3] driving said ambient light source using said controlled operating parameter; **characterized in that** the method further comprises:
[4] decoding a change code that specifies at least one change in said controlled operating parameter, said change code comprising at least one of a change type (F) and a rate parameter (Q);
[5] driving said ambient light source using said change through a range of values (R) of said controlled operating parameter without further light script command decoding.

16. The method of claim **15**, additionally comprising, prior to step [1], deriving said setting code from a first signal source (**HD**), and said change code from a second signal source (**AVS, DVD**).

17. The method of claim **15**, additionally comprising, prior to step [**1**], reading at least one of said setting code and said change code from a computer-readable medium (**DVD**).

18. The method of claim **15**, additionally comprising, after step [4], further changing said controlled operating parameter based on decoding one of a user preference and an input from a user interface.

19. An article of manufacture comprising:
a computer-readable medium (DVD) having computer-readable light script command encoding for dynamically controlling an ambient light source (88), said computer-readable medium comprising:
[1] a computer-readable a setting code (S) usable by said ambient light source to specify at least one controlled operating parameter that comprises at least one of a luminance (Y), a chrominance (x, y), and a light character (G); **characterized in that** the article of manufacture further comprises:
[2] a computer-readable change code (T) usable by said ambient light source to specify at least one change in said controlled operating parameter, said change code comprising at least one of a change type (F) and a rate parameter (Q); and said setting code and said change code each so formulated that said ambient light source using same and so dynamically controlled can fully execute said change through a range of values (R) of said controlled operating parameter without requiring further reading of said light script command encoding.

20. The article of claim **19**, further comprising a computer-readable second change code (**T2**) usable by said ambient light source to specify at least one second change in at least said controlled operating parameter, said second change code comprising at least one of a second change type and a second rate parameter; said setting code and said second change code each so formulated that said ambient light source so dynamically controlled can fully execute said second change without requiring further reading of said light script command encoding.

## Patentansprüche

1. Ein Verfahren zur Lichtskriptbefehl-Kodierung und zum dynamischen Betreiben einer Raumbeleuchtungs-Lichtquelle (88), das Verfahren umfassend:
[1] Kodieren eines Setting-Code (S), welcher von der besagten Raumbeleuchtungs-Lichtquelle (88) verwendbar ist, und welcher zumindest einen programmierten Betriebsparameter, welcher eine Luminanz (Y) und/oder eine Chrominanz (x, y) und/oder einen Lichtcharakter (G) umfasst, spezifiziert; **gekennzeichnet durch**:
[2] Kodieren eines Change-Code (T), welcher von der besagten Raumbeleuchtungs-Lichtquelle (88) verwendbar ist, und welcher zumindest eine Änderung des programmierten Betriebsparameters zu spezifiziert, wobei der Change-Code einen Änderungstyp (F) oder einen Ratenparameter (Q) umfasst; und wobei besagter Setting-Code (S) und besagter Change-Code (T) jeweils so abgefasst sind, dass besagte dynamisch betriebene Raumbeleuchtungs-Lichtquelle (88), welche diese verwendet, besagte Änderung durch einen Bereich von Werten (R) des besagten programmierten Betriebsparameters vollständig ohne eine weitere Befehlskodierung ausführen kann.

2. Das Verfahren nach Anspruch 1, wobei besagte Raumbeleuchtungs-Lichtquelle eine Anzahl einzelner Lichtquellen (3, LCI) umfasst, und wobei besagter Setting-Code weitergehend derart kodiert ist, sodass besagter programmierter Betriebsparameter für jede einer Anzahl von Licht-IDs (1 ... N) spezifiziert, wobei jede der Licht-IDs mit einer der besagten einzelnen Lichtquellen korrespondiert.

3. Das Verfahren nach Anspruch 1, wobei besagte Raumbeleuchtungs-Lichtquelle eine Anzahl einzelner Lichtquellen (3, LCI) umfasst, und wobei besagter Setting-Code weitergehend derart kodiert ist, sodass besagte Änderung in dem programmierten Betriebsparameter für jede einer Anzahl von Licht-IDs (1 ... N) spezifiziert, wobei jede der Licht-IDs mit einer der besagten einzelnen Lichtquellen korrespondiert.

4. Das Verfahren nach Anspruch 1, wobei das Verfahren umfasst:
[3] Kodieren eines zweiten Change-Code (T2), welcher von der besagten Raumbeleuchtungs-Lichtquelle verwendbar ist, und welcher zumindest eine zweite Änderung in zumindest dem besagten programmierten Betriebsparameter spezifiziert, wobei besagter zweiter Change-Code zumindest einen zweiten Änderungstyp oder einen zweiten Ratenparameter umfasst; wobei besagter Setting-Code und besagter zweiter Change-Code jeweils so abgefasst sind, dass die besagte Raumbeleuchtungs-Lichtquelle dynamisch betrieben die zweite Änderung ohne weitere Befehlskodierung ausführen kann.

5. Das Verfahren nach Anspruch 4, wobei das Verfahren weitergehend umfasst:
[4] Kodieren einer Wiederholung des besagten Setting-Code, welche so abgefasst ist, dass diese durch besagte Raumbeleuchtungs-Lichtquelle nach besagtem zweiten Change-Code verwendet werden kann.

6. Das Verfahren nach dem Anspruch 1, wobei besagter Change-Code derart abgefasst ist, als dass weiters eine Startzeit und eine Endzeit besagter Änderung kodiert werden.

7. Das Verfahren nach dem Anspruch 1, wobei der Change-Code einen Änderungstyp umfasst, welcher besagte Änderung in dem besagten programmierten Betriebsparameter spezifiziert, wobei besagter Änderungstyp eine der folgenden umfasst: eine Aufblendung, eine Abblendung; eine sinusförmige Ausgabe; eine trigonometrische Ausgabe; eine Impulsspitze; eine Wellenform; eine spezifizierte Funktion (F1) besagten Betriebsparameters; einen Operator; eine Einhüllende (C).

8. Das Verfahren nach dem Anspruch 1, wobei der Change-Code einen Ratenparameter umfasst, welcher besagte Änderung in besagtem programmierten Betriebsparameter umfasst, wobei besagter Ratenparameter zumindest eines der folgenden umfasst: ein Argument einer Funktion (2); ein Fading über eine Zeitdauer, in welcher das Fading durchgeführt wird; eine Ausblend-Zeitdauer, über welche eine Ausblendung durchgeführt wird; eine Stärke einer Funktion; eine Phase einer Funktion; eine Ausschaltzeitdauer; einer Anschaltzeitdauer; und einer Stufenfrequenz.

9. Das Verfahren nach dem Anspruch 1, wobei das Verfahren umfasst: eine Entropie-Kodierung zumindest eines Teils des besagten Setting-Code und/oder des besagten Change-Code.

10. Das Verfahren nach dem Anspruch 1, wobei das Verfahren weitergehend umfasst: Aufnehmen eines Skript umfassend den Setting-Code und/oder den Change-Code in paketierten Daten (S, T).

11. Das Verfahren nach dem Anspruch 10, wobei das Verfahren weitergehend umfasst: Übertragen besagten Skripts über einen Inhalts-Carrier; einen synchronen Daten-Carrier und/oder einen asynchronen Daten-Carrier; und Dekodieren besagten Skripts, um besagten dynamischen Betrieb der besagten Raumbeleuchtungs-Lichtquelle zu erlauben.

12. Das Verfahren nach dem Anspruch 1, weitergehend umfassend: Aufnehmen eines Skripts umfassend den Setting-Code oder den Change-Code auf einem computer-lesbaren Medium (DVD).

13. Das Verfahren nach dem Anspruch 12, weitergehend umfassend: Lesen des Skripts auf dem computer-lesbaren Medium (DVD) während der Anzeige eines Videoinhalts.

14. Das Verfahren nach dem Anspruch 1, weitergehend umfassend: Aufnehmen eines Skripts umfassend den Setting-Code und den Change-Code in paketierten Daten (S, T), wobei die paketierten Daten so abgefasst sind, als dass eine separate Kommunikation des Setting-Code und des Change-Code erlaubt ist.

15. Ein Verfahren zum dynamischen Betrieb einer Raumbeleuchtungs-Lichtquelle unter Verwendung einer Lichtskriptbefehl-Kodierung, umfassend:
[1] Dekodieren eines Setting-Code, welcher Einstellungen spezifiziert, welche von der Raumbeleuchtungs-Lichtquelle verwendet werden;
[2] Verwendung der Dekodierung des Setting-Code, um zumindest einen programmierten Betriebsparameter zu spezifizieren, welcher eine Luminanz (Y) und/oder eine Chrominanz (x, y) und/oder einen Lichtcharakter (G) umfasst;
[3] Betreiben der Raumbeleuchtungs-Lichtquelle unter Verwendung des programmierten Betriebsparameters;
[4] Dekodieren eines Change-Codes, welcher zumindest eine Änderung in dem programmierten Betriebsparameter spezifiziert, wobei der Change-Code einen Änderungstyp (F) und/oder einen Ratenparameter (Q) umfasst;
[5] Betreiben der Raumbeleuchtungs-Lichtquelle unter Verwendung der Änderung durch einen Bereich von Werten (R) des programmierten Betriebsparameters ohne weitere Dekodierung von Lichtskriptbefehlen.

16. Das Verfahren nach dem Anspruch 15, zusätzlich umfassend, vor Schritt [1]: Ableiten des Setting-Code von einer ersten Signalquelle (HD); und den Change-Code von einer zweiten Signalquelle (AVS, DVD).

17. Das Verfahren nach dem Anspruch 15, zusätzlich umfassend, vor Schritt [1]: Lesen des Setting-Code und/oder des Change-Code von einem computer-lesbaren Medium (DVD).

18. Das Verfahren nach Anspruch 15, zusätzlich umfassend, nach Schritt [4]: weitere Änderung des programmierten Betriebsparameters auf Basis einer Dekodierung einer Benutzereinstellung und einer Eingabe von einem Benutzer-Interface.

19. Ein hergestellter Gegenstand umfassend:
ein computer-lesbares Medium (DVD) mit einer computer-lesbaren Lichtskript-Kodierung zum dynamischen Betrieb einer Raumbeleuchtungs-Lichtquelle (88), wobei das Computer-lesbare Medium umfasst:
[1] einen computer-lesbaren Setting-Code (S), der von der Raumbeleuchtungs-Lichtquelle verwendbar ist, und welcher zumindest einen programmierten Betriebsparameter spezifiziert, welcher eine Luminanz (Y) und/oder eine Chrominanz (x, y) und/oder einen Lichtcharakter (G) umfasst; der Gegenstand **gekennzeichnet durch**
[2] einen computer-lesbaren Change-Code (T), der von der Raumbeleuchtungs-Lichtquelle verwendbar ist, und welcher zumindest eine Änderung des programmierten Betriebsparameters spezifiziert, wobei der Setting-Code und der Change-Code so abgefasst sind, dass die Raumbeleuchtungs-Lichtquelle diese verwendet und so dynamisch betrieben die Änderung durch einen Bereich von Werten (R) des programmierten Betriebsparameters vollständig ausführt, ohne dass ein weiteres Auslesen der Lichtskriptbefehl-Kodierung nötig wäre.

20. Der Gegenstand nach dem Anspruch 19, weiters umfassend einen computer-lesbaren zweiten Change-Code (T2), welcher von der Raumbeleuchtungs-Lichtquelle verwendet wird, und welcher zumindest eine weitere Änderung in zumindest dem programmierten Betriebsparameter feststellt, wobei der zweite Change-Code einen zweiten Änderungstyp und/oder einen zweiten Ratenparameter umfasst; und wobei der Setting-Code und der zweite Change-Code so abgefasst sind, dass die so dynamisch betriebene Raumbeleuchtungs-Lichtquelle die zweite Änderung vollständig ausführen kann, ohne dass ein weiteres Auslesen der Lichtskriptbefehl-Kodierung nötig wäre.

## Revendications

1. Procédé de codage de commande de texte écrit lumineux pour permettre une régulation dynamique d'une source de lumière ambiante (88) comprenant des étapes consistant à :
[1] coder un code de réglage (S) pouvant être utilisé par la source de lumière ambiante de manière à préciser au moins un paramètre de fonctionnement régulé comprenant la luminance (Y) et/ou la chrominance (x, y) et/ou un caractère lumineux (G), **caractérisé en ce qu'**il comprend en outre une étape consistant à :
[2] coder un code de modification (T) pouvant être utilisé par la source de lumière ambiante pour préciser au moins une modification du paramètre de fonctionnement commandé, ce code de modification comprenant un type de modification (F) et/ou un paramètre de vitesse (Q), et le code de réglage et le code de modification étant formulés de sorte que la source de lumière ambiante l'utilisant et ainsi dynamiquement régulée puisse totalement exécuter la modification sur une plage de valeurs (R) du paramètre de fonctionnement régulé sans autre codage de commande.

2. Procédé conforme à la revendication 1, selon lequel la source de lumière ambiante comprend un ensemble de sources de lumière individuelles (3, CL1), et le code de réglage est en outre codé pour préciser le paramètre de fonctionnement régulé pour chaque actionneur d'interface parmi un ensemble d'actionneurs d'interface de lumière IDs (1...N) ; correspondant chacun à l'une des sources de lumière individuelles.

3. Procédé conforme à la revendication 1, selon lequel la source de lumière ambiante comprend un ensemble de sources de lumière individuelles (3, CL1), et le code de modification est en outre codé pour préciser la modification du paramètre de fonctionnement régulé pour chaque actionneur d'interface parmi un ensemble d'actionneurs d'interface de lumière IDs (1...N) correspondant chacun à l'une des sources de lumière.

4. Procédé conforme à la revendication 1, comprenant en outre une étape consistant à :
[3] coder un second code de modification (T2) pouvant être utilisé par la source de lumière ambiante pour préciser au moins une seconde modification du paramètre de fonctionnement régulé, ce second code de modification comprenant un second type de modification et/ou un second paramètre de vitesse, le code de réglage et le second code de modification étant chacun formulés de sorte que la source de lumière ambiante ainsi dynamiquement régulée puisse exécuter totalement la seconde modification sans autre codage de commande.

5. Procédé conforme à la revendication 4, comprenant en outre une étape consistant à :
[4] coder une répétition du code de réglage formulée pour pouvoir être utilisée par la source de lumière ambiante après le second code de modification.

6. Procédé conforme à la revendication 1, selon lequel le code de modification est formulé de façon à permettre de coder en outre un instant de départ et/ou un instant d'arrêt de la modification.

7. Procédé conforme à la revendication 1, selon lequel le code de modification comprend un type de modification qui précise la modification du paramètre de fonctionnement régulé, ce type de variation comprenant une ouverture en fondu et/ou une fermeture en fondu et/ou un pic et/ou une sortie trigonométrique et/ou un pic et/ou une forme d'onde et/ou une fonction précisée (F1) du paramètre de fonctionnement, un opérateur et une enveloppe (C).

8. Procédé conforme à la revendication 1, selon lequel le code de modification comprend un paramètre de vitesse qui précise la modification du paramètre de fonctionnement régulé, le paramètre de vitesse comprenant l'argument d'une fonction (2) et/ou une durée d'ouverture en fondu dans lequel une ouverture en fondu se produit, une durée de fermeture en fondu pendant laquelle une fermeture en fondu se produit, et/ou l'amplitude d'une fonction et/ou la phase d'une fonction et/ou une durée de fermeture et/ou une durée d'ouverture et/ou une fréquence discontinue.

9. Procédé conforme à la revendication 1, comprenant en outre une étape consistant à coder l'entropie d'au moins une partie du code de réglage et/ou du code de modification.

10. Procédé conforme à la revendication 1, comprenant en outre une étape consistant à enregistrer un texte écrit comprenant le code de réglage et/ou le code de modification sous la forme de données groupées par paquets (S, T).

11. Procédé conforme à la revendication 10, comprenant en outre une étape consistant à transmettre le texte écrit sur une porteuse de contenu et/ou une porteuse de données synchrones et/ou une porteuse de données asynchrones, et à décoder le texte écrit pour permettre la régulation dynamique de la source de lumière ambiante.

12. Procédé conforme à la revendication 1, comprenant en outre une étape consistant à enregistrer un texte écrit comprenant le code de réglage et/ou le code de modification sur un support lisible par ordinateur (DVD).

13. Procédé conforme à la revendication 12, comprenant en outre une étape consistant à lire le texte écrit sur le support lisible par ordinateur (DVD) au cours de l'affichage d'un contenu vidéo.

14. Procédé conforme à la revendication 1, comprenant en outre une étape consistant à enregistrer un texte écrit comprenant le code de réglage et le code de modification dans des données groupées par paquets (S, T), ces données groupées par paquets étant formulées de façon à permettre une communication séparée du code de réglage et du code de modification.

15. Procédé de régulation dynamique d'une source de lumière ambiante en utilisant un codage de commande de texte écrit lumineux comprenant des étapes consistant à :
[1] décoder un code de réglage qui précise des réglages pouvant être utilisés par la source de lumière ambiante ;
[2] utiliser le décodage du code de réglage pour préciser au moins un paramètre de fonctionnement régulé comprenant la luminance (Y) et/ou la chrominance (x, y) et/ou un caractère lumineux (G) ;
[3] actionner la source de lumière ambiante en utilisant le paramètre de fonctionnement régulé, **caractérisé en ce qu'**il comprend en outre des étapes consistant à :
[4] décoder un code de modification qui précise au moins une modification du paramètre de fonctionnement régulé, ce code de modification comprenant un type de modification (F) et/ou un paramètre de vitesse (Q) ;
[5] actionner la source de lumière ambiante en utilisant cette modification sur une plage de valeurs (R) du paramètre de fonctionnement régulé sans autre décodage de la commande du texte écrit lumineux.

16. Procédé conforme à la revendication 15, comprenant en outre, avant l'étape (1) une étape consistant à dériver le code de réglage d'une première source de signal (HD) et le code de modification d'une seconde source de signal (AVS, DVD).

17. Procédé conforme à la revendication 15, comprenant en outre avant l'étape (1) une étape consistant à lire le code de réglage et/ou le code de modification sur un support lisible par ordinateur (DVD).

18. Procédé conforme à la revendication 15, comprenant en outre après l'étape (4) une étape consistant à modifier le paramètre de fonctionnement régulé sur le fondement du décodage d'une préférence d'utilisateur ou d'une entrée provenant d'une interface d'utilisateur.

19. Article manufacturé comprenant :
un support lisible par ordinateur (DVD) ayant un codage de commande de texte écrit lumineux lisible par ordinateur pour permettre de réguler dynamiquement une source de lumière ambiante (88), ce support lisible par ordinateur comprenant :
[1] un code de réglage lisible par ordinateur (S) utilisable par la source de lumière ambiante pour préciser au moins un paramètre de fonctionnement régulé qui comprend la luminance (Y) et/ou la chrominance (x, y) et/ou un caractère lumineux (G), **caractérisé en ce que** cet article manufacturé comporte en outre
[2] un code de modification lisible par ordinateur (T) utilisable par la source de lumière ambiante pour préciser au moins une modification du paramètre de fonctionnement régulé, ce code de modification comprenant un type de modification (F) et/ou un paramètre de vitesse (Q), et le code de réglage et le code de modification étant chacun formulés de sorte que la source de lumière ambiante l'utilisant est ainsi régulée dynamiquement puisse totalement exécuter cette modification sur une plage de valeurs (R) du paramètre de fonctionnement régulé sans exiger une autre lecture du codage de la commande du texte écrit lumineux.

20. Article conforme à la revendication 19, comprenant en outre un second code de modification lisible par ordinateur (T2) pouvant être utilisé par la source de lumière ambiante pour préciser au moins une seconde modification du paramètre de fonctionnement régulé, ce second code de modification comprenant un second type de modification et/ou un second paramètre de vitesse, le code de réglage et le second code de modification étant chacun formulés de sorte que la source de lumière ambiante ainsi dynamiquement régulée puisse exécuter totalement la seconde modification sans exiger une autre lecture du codage de commande du texte écrit lumineux.
